(19) Europäisches Patentamt
European Patent Office
Office européen des brevets

(11) Publication number: 0 515 170 A2

# (12) EUROPEAN PATENT APPLICATION

(21) Application number: 92304575.1

(51) Int. Cl.$^5$: C08G 61/02

(22) Date of filing: 20.05.92

(30) Priority: 22.05.91 US 703957

(43) Date of publication of application:
25.11.92 Bulletin 92/48

(84) Designated Contracting States:
AT BE CH DE ES FR GB IT LI NL SE

(71) Applicant: THE DOW CHEMICAL COMPANY
2030 Dow Center, Abbott Road
Midland, MI 48640 (US)

(72) Inventor: Hahn, Stephen F.
6267 Neiner Road
Sanford Michigan 48657 (US)
Inventor: Kirchhoff, Robert A.
3800 Fuller Drive
Midland, Michigan 48640 (US)
Inventor: Bruza, Kenneth J.
5651 North Luce Road
Alma, Michigan 48801 (US)
Inventor: Spencer, Lana S.
504 West Meadowbrook
Midland, Michigan 48640 (US)

(74) Representative: Burford, Anthony Frederick et al
W.H. Beck, Greener & Co. 7 Stone Buildings
Lincoln's Inn
London WC2A 3SZ (GB)

## (54) Biscyclobutarene/polymaleimide copolymers.

(57) Copolymers comprising, in polymerized form, a biscyclobutarene comonomer and a polymaleimide comonomer, have improved physical properties compared with polymaleimide homopolymers. Preferably, the copolymers also comprise a free radical initiator and a 1,1-substituted ethylene comonomer.

EP 0 515 170 A2

This invention relates to polymers prepared from bismaleimide monomers, and processes for preparing them.

Thermoset resins are compositions which solidify irreversibly upon curing. Such resins are useful in many engineering applications, some of which include: coatings, structural laminates, adhesives, films, and composites. Desirable physical properties include enhanced chemical resistance, a high glass transition temperature (hereinafter Tg), high tensile strength, high temperature resistance, electroinsulative properties, and oxidative stability.

Bismaleimides are commercially available monomers currently being evaluated as a potential matrix resin for high performance structural composites where excellent thermal and thermooxidative stability are required. Unfortunately, polymers derived from bismaleimides are susceptible to degradation of their physical properties by moisture as well as many common organic solvents. Bismaleimides have good thermal stability but are extremely brittle indicating they have a high degree of crosslinking.

It would be desirable to have new thermoset polymers with improved physical properties or improved combinations of physical properties compared to those of known bismaleimide homopolymers. Some of these properties include enhanced oxidative stability (0 percent weight loss at 350°C), chemical/solvent resistance, high tensile strength, high temperature resistance, electroinsulative properties, decreased water absorption and a high Tg (greater than 200°C). It would be further desirable to have a polymer system with a low polymerization onset temperature thereby allowing removal of the polymer from the mold after a preliminary curing period followed by transfer to an oven, a less expensive piece of equipment, for additional curing; thus making the mold, a more expensive piece of equipment, available for the next polymerization run. It would be still further desirable for such polymer systems to have a polymerization onset temperature lower than 150°C.

This invention, in one aspect, is a mixture of monomers comprising at least one polymaleimide and a biscyclobutarene in an amount sufficient to provide the polymerization product of the mixture with improved physical properties or improved combinations of physical properties compared to those of known bismaleimide homopolymers. Some of these properties include enhanced oxidative stability (0 percent weight loss at 350°C), chemical/solvent resistance, high tensile strength, high temperature resistance, electroinsulative properties, decreased water absorption and a high Tg (greater than 200°C).

In another aspect, this invention is a copolymer comprising, in polymerized form, at least one polymaleimide comonomer and a biscyclobutarene comonomer in an amount sufficient to provide improved physical properties or improved combinations of physical properties compared to those of known bismaleimide homopolymers. Some of these properties include enhanced oxidative stability (0 percent weight loss at 350°C), chemical/solvent resistance, high tensile strength, high temperature resistance, electroinsulative properties, decreased water absorption and a high Tg (greater than 200°C).

In still another aspect, this invention is a process for producing said copolymer, comprising combining the monomers to form a mixture under conditions sufficient to form a copolymer. The monomer mixture thermally copolymerizes at a temperature lower than that observed for the polymaleimide alone and yields, in preferred embodiments, copolymers with improved physical properties or improved combinations of physical properties compared to those of known bismaleimide homopolymers. Some of these properties include enhanced oxidative stability (0 percent weight loss at 350°C), chemical/solvent resistance, high tensile strength, high temperature resistance, electroinsulative properties, decreased water absorption and a high Tg (greater than 200°C).

One advantage of this low temperature at which copolymerization begins (hereinafter called onset temperature) is the ability to remove the copolymer from the mold after a preliminary curing period, thereby making the mold, an expensive piece of equipment, available for the next polymerization run. Following the preliminary curing period, the polymer can be placed in an oven, a less expensive piece of equipment, for additional curing. These copolymers are useful in many thermoset applications; some of which include composites, coatings, and adhesives.

The biscyclobutarene monomer suitably employed in this invention is copolymerizable with a polymaleimide. Preferably such monomers correspond to the formula

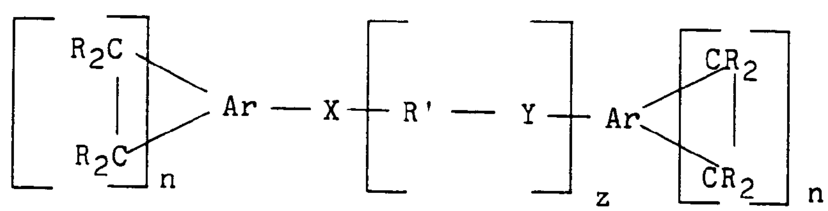

wherein:

n is an integer of 1 or more;
z is an integer between 0 and 3 inclusive;
X is

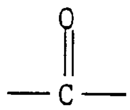 , 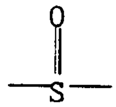 , 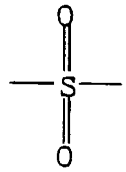 ,

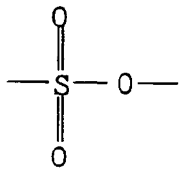 , 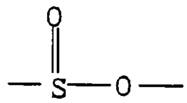 ,

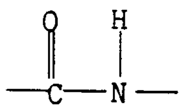 , 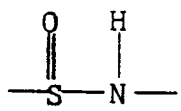 , 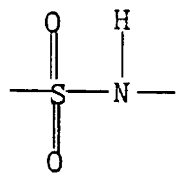 ,

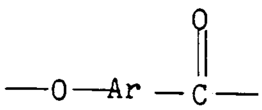 , 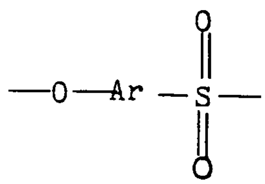 ,

with the proviso that no combination of Ar, X, R, R′, and Y results in a formula corresponding to an ester;
R′ is a direct bond or an alkyl, cycloalkyl, heterocyclic, aromatic, heteroaromatic, alkaryl, arylalkyl, cycloalkaryl, aryloxy, alkyloxy, aminoaryl, aminoalkyl, arylamino, alkylamino, arylsilyl, silylaryl,

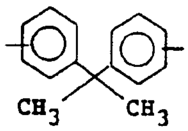 , 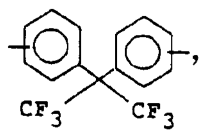 ,

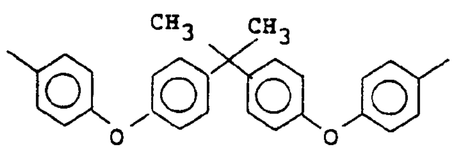 ,

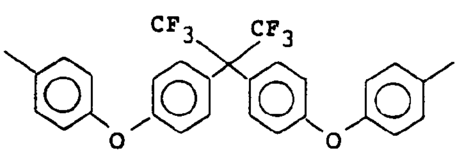 , 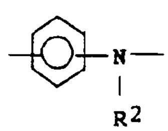 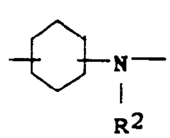 ,

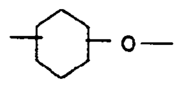 , 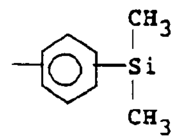 , 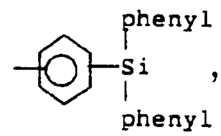 ,

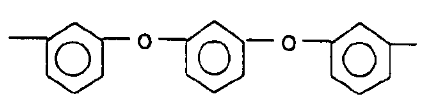 , 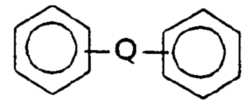

wherein $R^2$ is H or $C_1$-$C_4$ alkyl; and Q is a direct bond, alkyl, isopropylidene, hexafluoroisopropylidene, oxyaryloxy, sulfur, sulfone, sulfoxide, amino, alkamino, cycloalkyl, oxygen, dimethylsilyl, diphenylsilyl, or a phosphorus-containing moiety;

Y is a direct bond or X;

Ar is a polyvalent aromatic moiety or a polyvalent heteroaromatic moiety, provided that the carbon atoms of the cyclobutane ring on the fused side are bonded to adjacent carbon atoms on the same aromatic ring of Ar; and

R is a monovalent moiety, preferably hydrogen or a $C_1$-$C_4$ alkyl.

Hereinafter these monomers will be called biscyclobutarene monomers.

A cyclobutarene moiety is an aromatic moiety which contains one or more cyclobutanes fused to an aromatic ring, provided that the cyclobutane carbon atoms on the fused side are bonded to adjacent carbon atoms on the same aromatic ring of Ar. Methods for making cyclobutarene precursors are disclosed in US-A-4,562,280 and 4,570,011. Suitable cyclobutarene moieties and their preparation are disclosed in US-A-4,540,763; 4,999,449; 4,724,260; 4,831,172; 4,783,514; 4,642,329; 4,743,399; 4,661,193; and 4,812,588. Other suitable cyclobutarene moieties are prepared as follows.

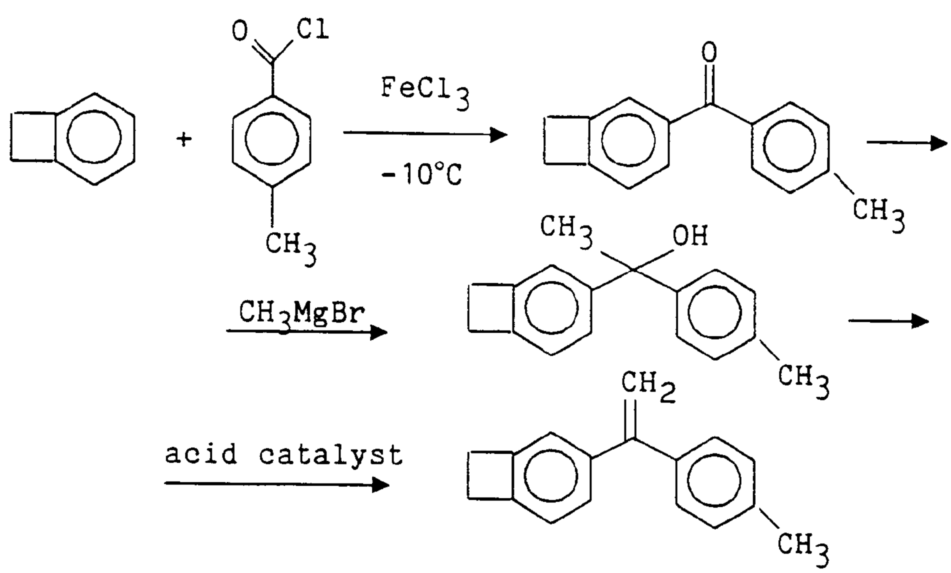


As is shown above, a cyclobutarene is combined with an alkylaromatic acid chloride in the presence of a Friedel Crafts catalyst to yield a diaryl ketone. The diaryl ketone is combined with a Grignard Reagent, such as methylmagnesiumbromide, to provide an alcohol product. Methyllithium can be used in place of the Grignard reagent to obtain the same alcohol product. The alcohol product is combined with an acid catalyst and one molecule of water is eliminated to form 3-(1-(4-methylphenyl)ethenyl)-bicyclo(4.2.0)octa-1,3,5-triene. Suitable acid catalysts include mineral acids, Lewis acids, organic acids, clays, and silicas.

A second possible route for preparing suitable cyclobutarenes is as follows.

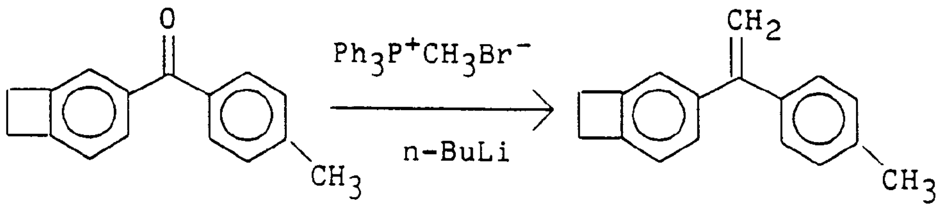


In the above reaction, methyltriphenyl-phosphonium-bromide is combined with n-butyllithium to make an ylid. The ylid reacts with the ketone carbonyl, inserts a $CH_2$ group and simultaneously removes the oxygen, thereby producing 3-(1-(4-methylphenyl)ethenyl)bicyclo(4.2.0)octa-1,3,5-triene.

Preferably, the cyclobutarene moiety is a benzocyclobutane moiety.

Aromatic moieties are carbocyclic or heterocyclic ring compounds containing $(4n+2)\pi$ electrons in an orbital ring as described in Morrison & Boyd, *Organic Chemistry*, 3rd ed., 1973. This property is also known as resonance stabilization or delocalization. Carbocyclic means the aromatic moiety has only carbon atoms in its nucleus. Heterocyclic means the aromatic moiety has atoms other than, and in addition to, carbon in its nucleus; such atoms comprising oxygen, nitrogen, phosphorus, silicon, and sulfur. Suitable aromatic moieties are those derived from benzene, naphthalene, phenanthrene, anthracene, pyridine, biaryl moieties such as (1-methylethylidene)di-4,1-phenylene ester, bicyclo(4.2.0)-octa-1,3,5-triene-3-carboxylic acid; biphenyloxide;

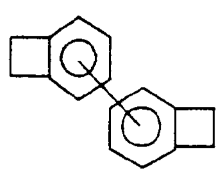 ;

two or more aromatic moieties which are bridged by alkylene or cycloalkylene moieties. Preferred aromatic moieties are those derived from benzene, naphthalene, biphenyl, binaphthyl, diphenylalkene, cyclobutarene, and diphenylcycloalkene moieties.

More preferred aromatic moieties are those derived from benzene, naphthalene, and biphenyl. The most preferred aromatic moiety is derived from benzene.

The aromatic moiety can be further substituted with a variety of monovalent moieties. Examples of suitable monovalent moieties include $-NO_2$, -CN, Br, I, Cl, F, H, -OH, $-PR_2$, $-CO_2R$, -CHO,

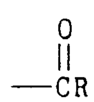 , 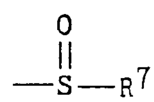 , 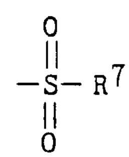 ,

hydrocarbyl, hydrocarbyloxy, hydrocarbylthio, -OR, -NHR, and $-NR_2$; wherein R is H or alkyl and $R^7$ is alkyl or aryl. Hydrocarbyl refers to any organic moiety containing only carbon and hydrogen atoms. As used, the term hydrocarbyl means a monovalent hydrocarbon moiety including the following: alkyl, alkenyl, alkynyl, cycloalkyl, cycloalkenyl, cycloalkynyl, aryl, aliphatic and cycloaliphatic aralkyl and alkaryl, each having 1 to 20 carbons. Aliphatic refers herein to straight- and branched-, saturated and unsaturated, hydrocarbon chains, i.e. , alkyl, alkenyl or alkynyl. Cycloaliphatic refers herein to saturated and unsaturated cyclic hydrocarbons, that is, cycloalkenyl, cycloalkynyl, and cycloalkyl. Aryl refers herein to biphenyl, phenyl, naphthyl, phenanthrenyl, anthracenyl and two aryl groups bridged by an alkylene group or heteroatoms such as oxygen and sulfur. Alkaryl refers herein to an alkyl-, alkenyl- or alkynyl-substituted aryl substituent wherein aryl is as defined herein- before. Alkenearyl refers herein to a radical which contains at least one alkene portion and one aromatic portion, and includes those radicals in which more than one alkene radical alternates with more than one aryl radical. $C_{1-20}$ alkyl includes straight- and branched-chain methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl moieties. $C_{1-10}$ alkyl includes methyl, ethyl, propyl, butyl, pentyl, hexyl, heptyl, octyl, nonyl, and decyl moieties.

Cycloalkyl refers to alkyl groups containing one or more cycloaliphatic rings. Cycloalkenyl refers to mono-

and polycyclic aliphatic groups containing one or more double bonds.

The most preferred X is a ketone carbonyl moiety, i.e., a carbonyl wherein each of the two valence bonds of the carbonyl are attached to a different carbon atom.

The preferred R′ moieties include a direct bond, and those derived from aromatic, heteroaromatic, alkylaryl, arylalkyl, cycloalkaryl, aryloxy, aminoaryl, and arylamino moieties. The more preferred R′ moieties include a direct bond, and those derived from aromatic and heteroaromatic moieties. The most preferred R′ moiety is phenylene.

The most preferred Y is a ketone carbonyl moiety.

The more preferred R moieties are hydrogen and $C_1$-$C_4$ alkyl. The most preferred R moiety is hydrogen.

Suitable biscyclobutarene monomers include the following.

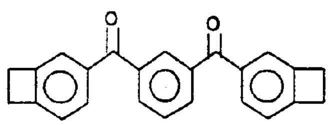 , 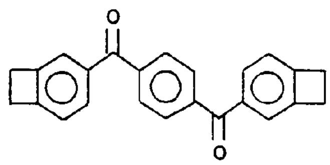 , 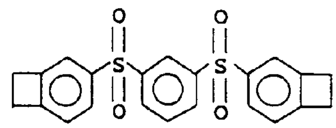 ,

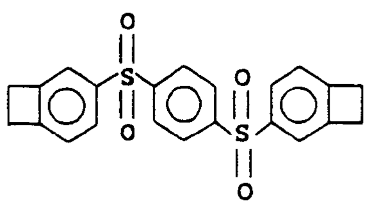 , 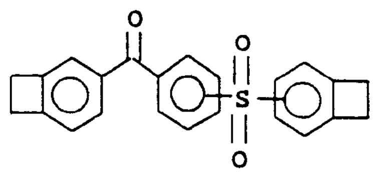 ,

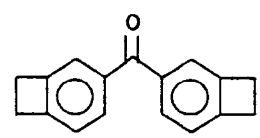 , 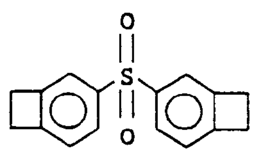 , 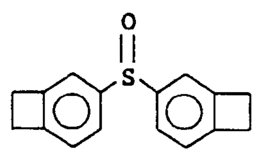 ,

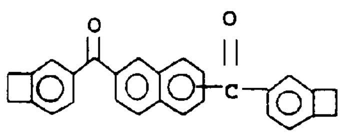 , 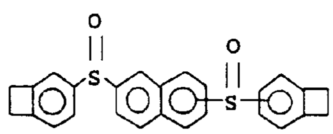 , 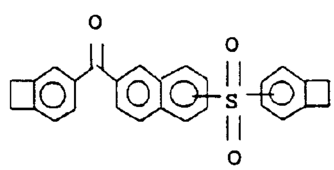 ,

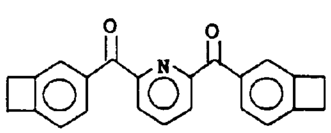 , 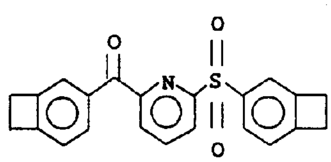 , 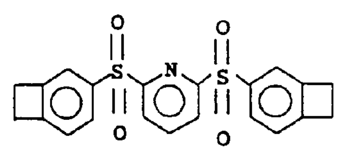 ,

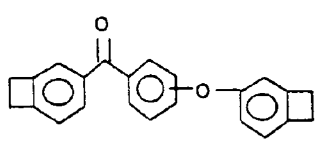 , 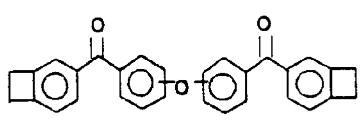 , 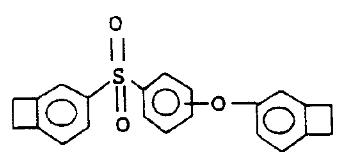 ,

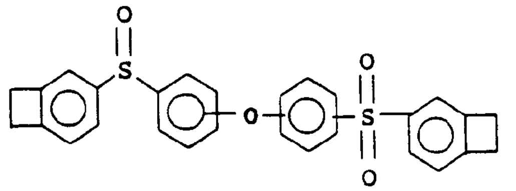 ,

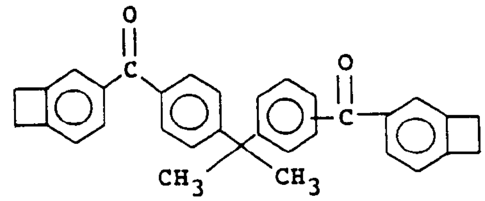 ,

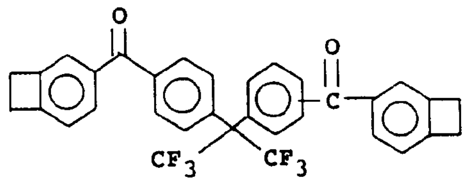 ,

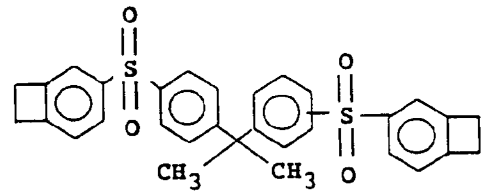 ,

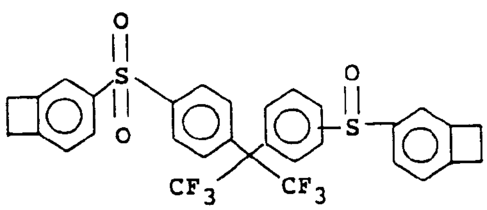 ,

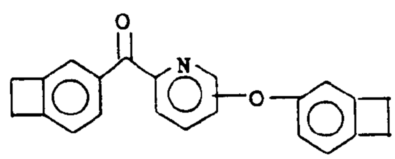 ,

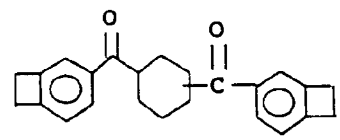 ,

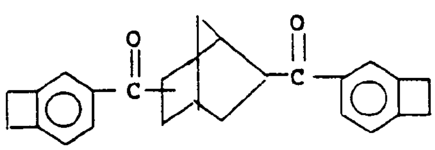 ,

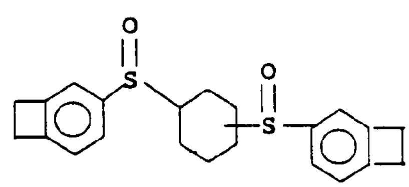 ,

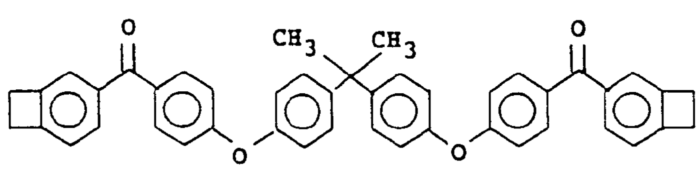 ,

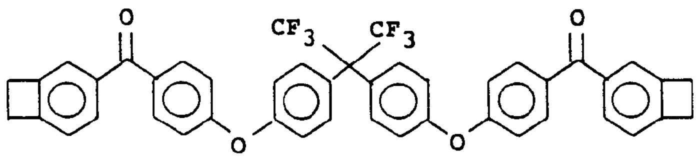 ,

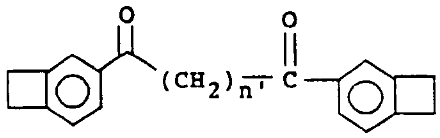,

n' = 1 - 10

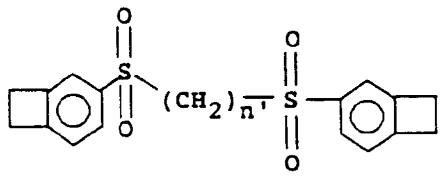,

n' = 1 - 10

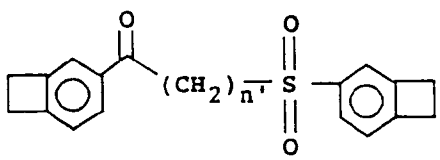,

n' = 1 - 10

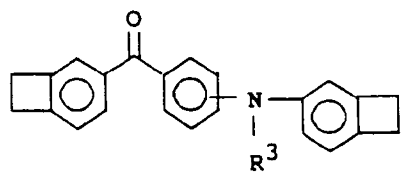,

$R^3$ = H or alkyl

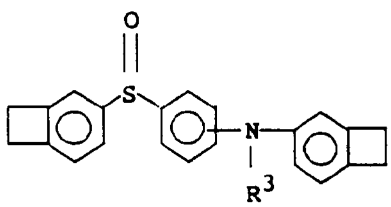,

$R^3$ = H or alkyl

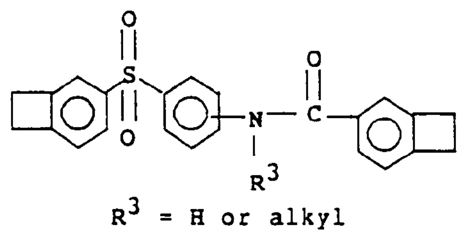,

$R^3$ = H or alkyl

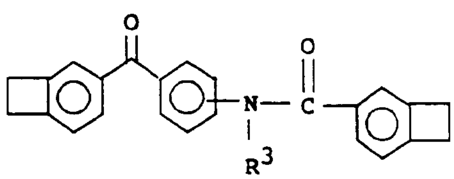,

$R^3$ = H or alkyl

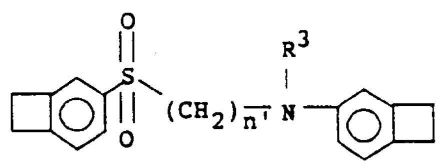,

n' = 1 - 10

$R^3$ = H or alkyl

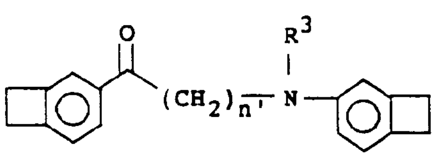,

n' = 1 - 10

$R^3$ = H or alkyl

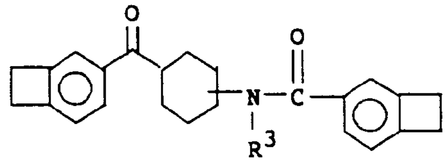,

$R^3$ = H or alkyl

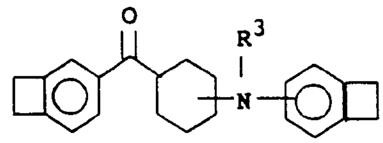 ,

$R^3$ = H or alkyl

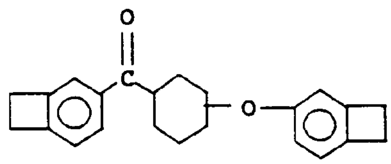 , 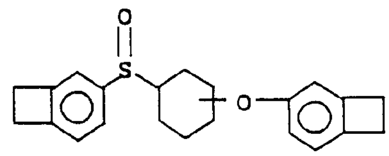 ,

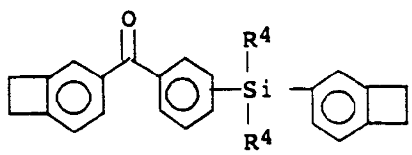 , 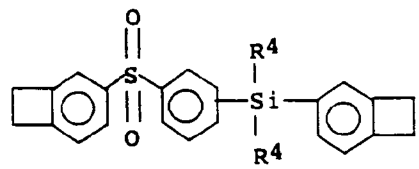 ,

$R^4$=$CH_3$ or Phenyl          $R^4$=$CH_3$ or Phenyl

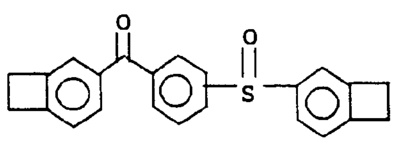 ,

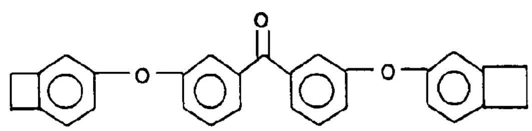 ,

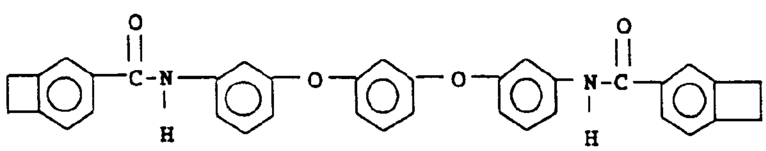 ,

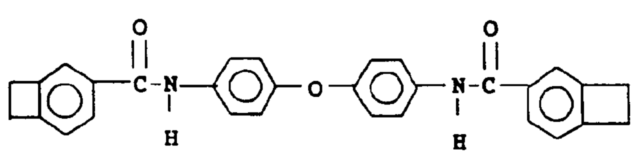 ,

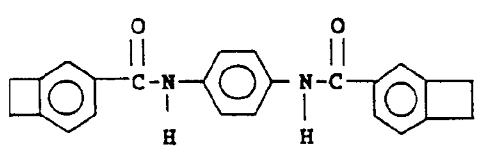 ,

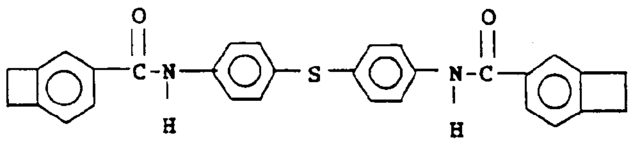 ,

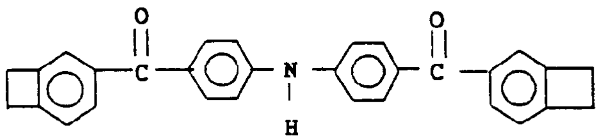 ,

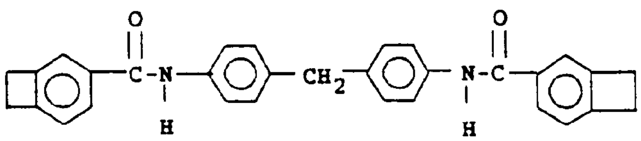 ,

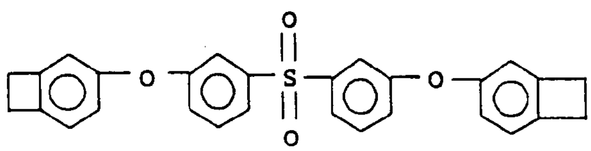 ,

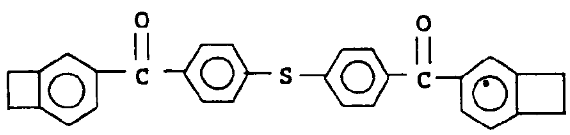 ,

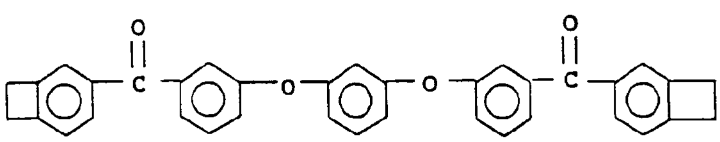 ,

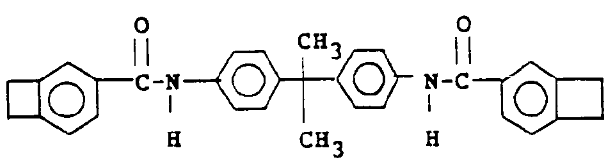 ,

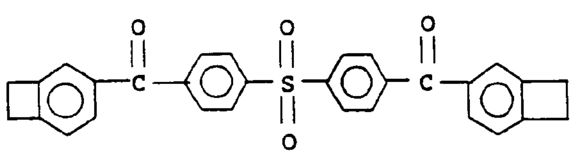 ,

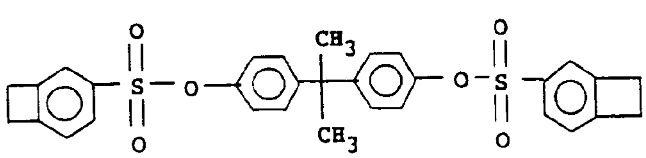 ,

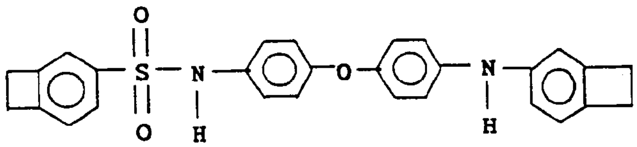 ,

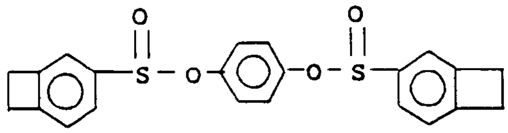 ,

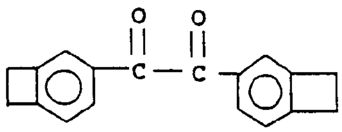 ,

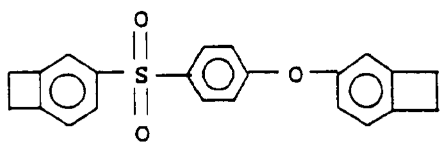 ,

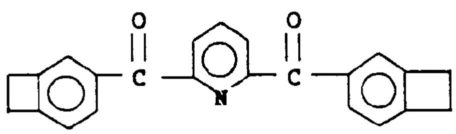 ,

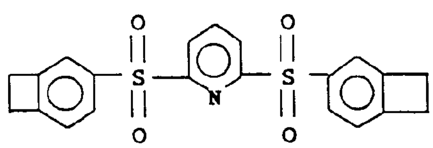 ,

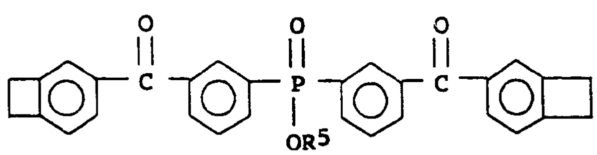 ,

$R^5$ = alkyl, aryl

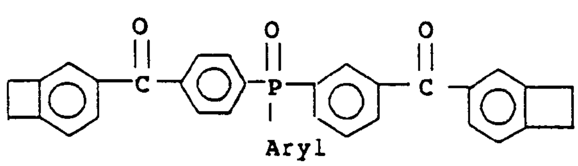 ,

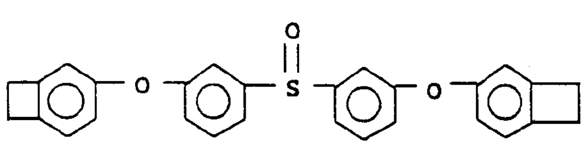 ,

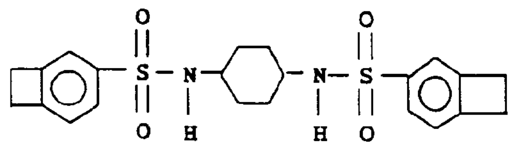 ,

and

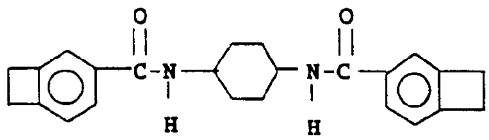 .

The more preferred biscyclobutarene monomers correspond to the formulae:

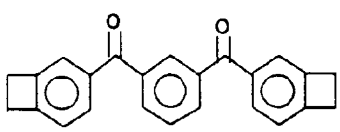 , 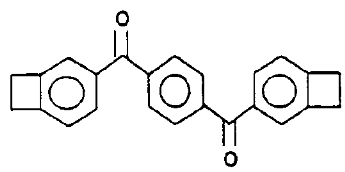 , 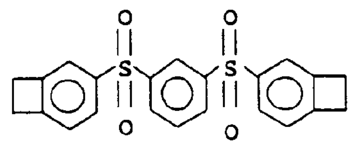 ,

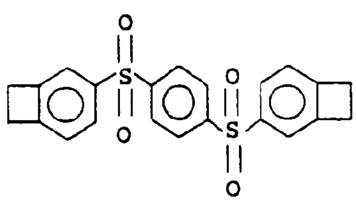 , 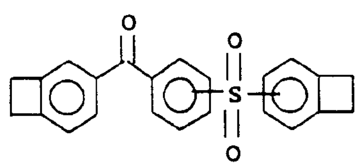 ,

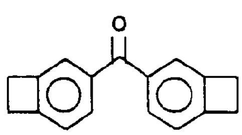 , 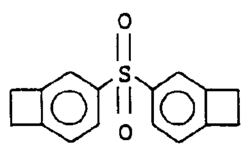 , 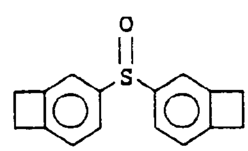 ,

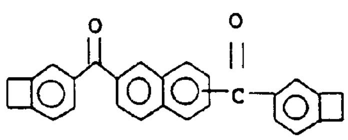 , 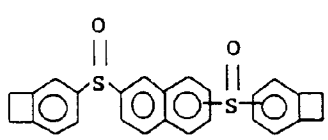 , 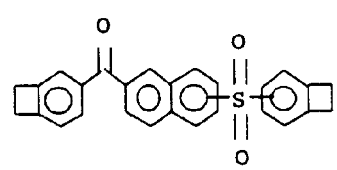 ,

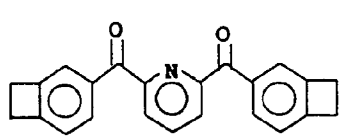 , 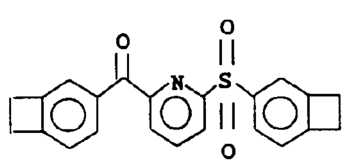 , 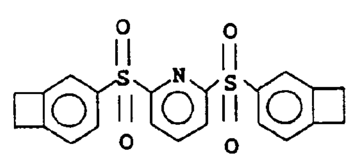 ,

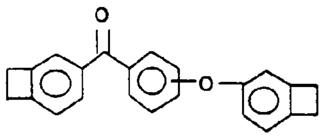 ,

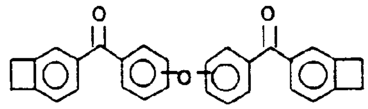 ,

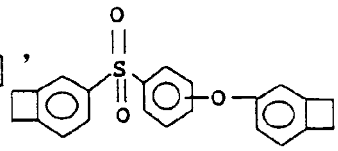 ,

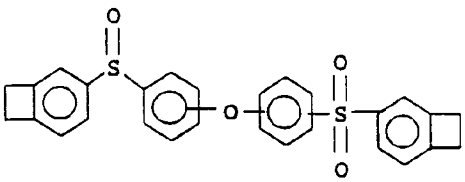 ,

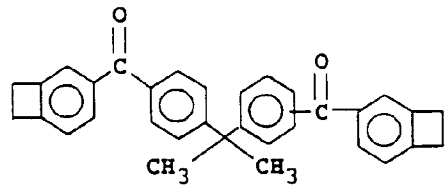 ,

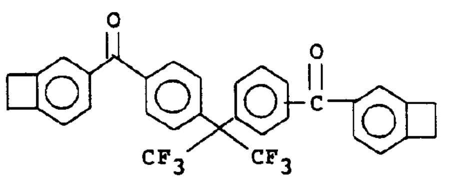 ,

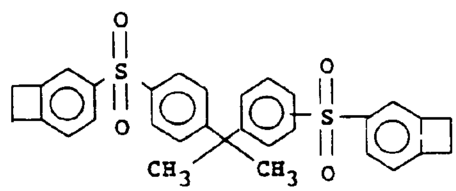 ,

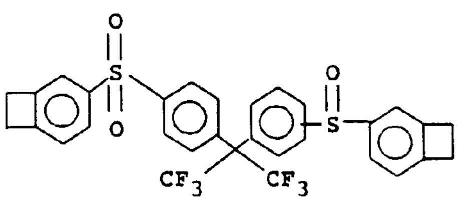 ,

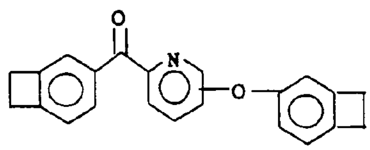 ,

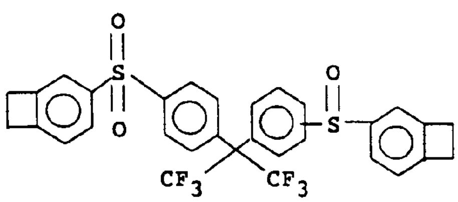 ,

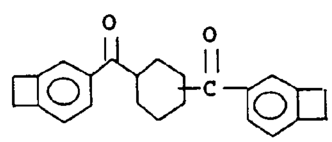 ,

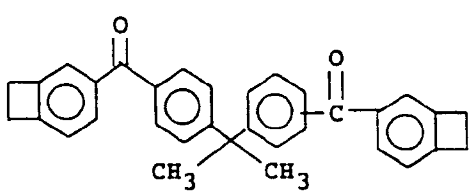 ,

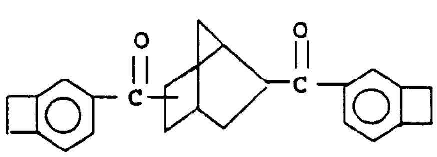 ,

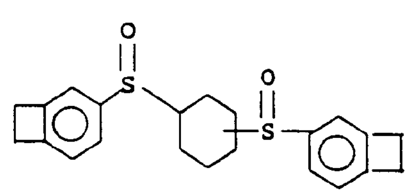 ,

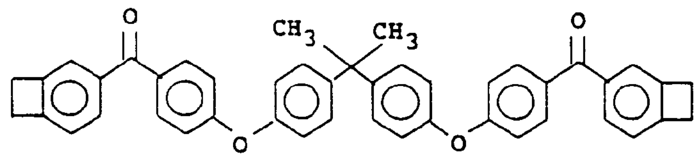
,

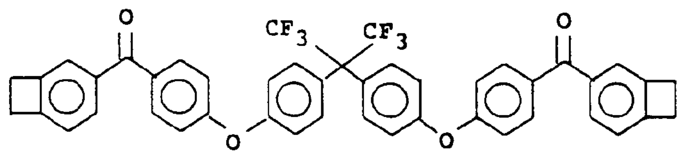
,

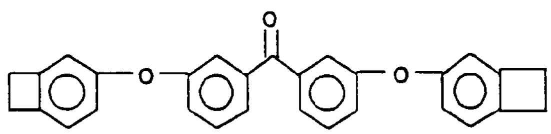
,

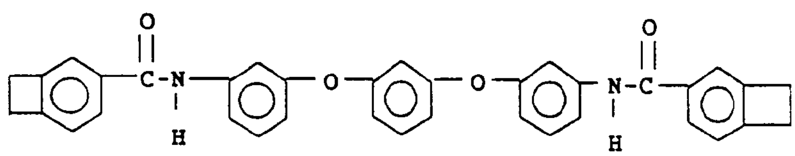
,

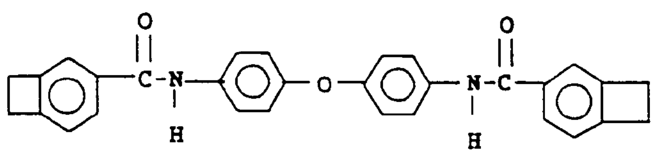
,

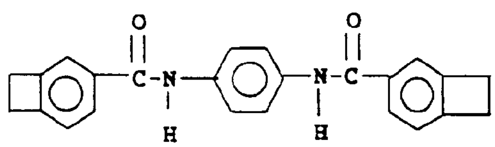
,

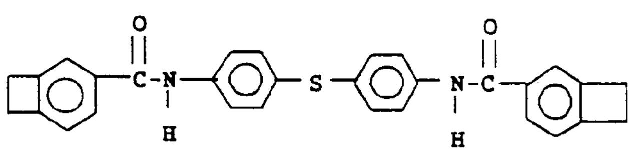
,

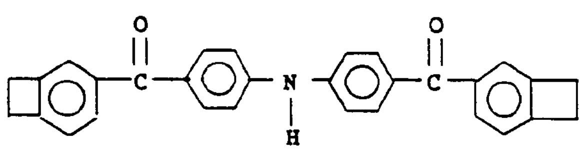
,

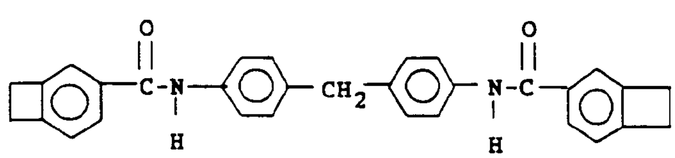
,

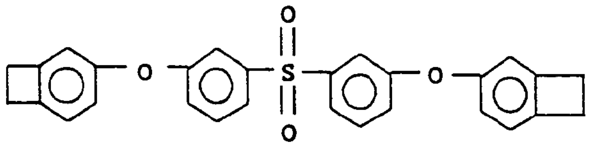

,

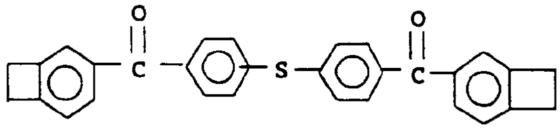

,

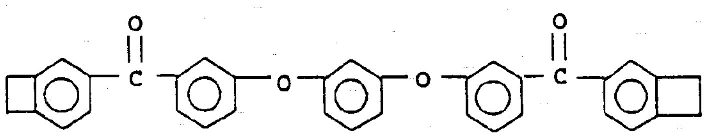

,

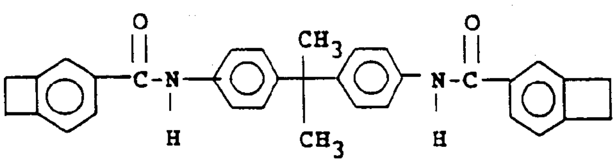

,

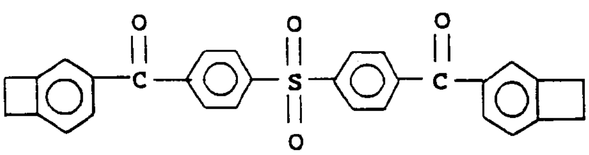

,

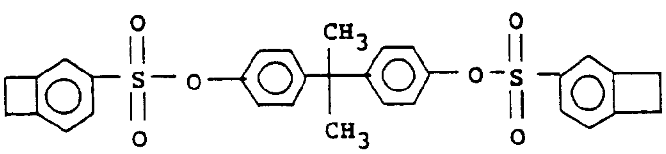

,

and

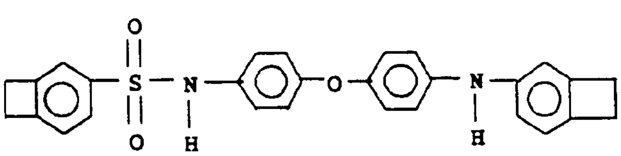

.

The most preferred biscyclobutarene monomer corresponds to the formula:

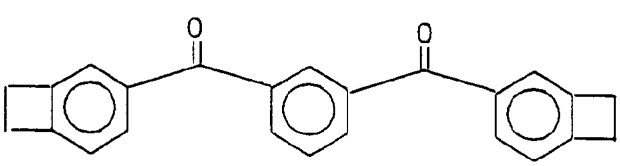

.

Suitable biscyclobutarene monomers and their preparation are disclosed in US-A-4,540,763, and 4,999,449.

An additional route for preparing suitable biscyclobutarene monomers is shown below.

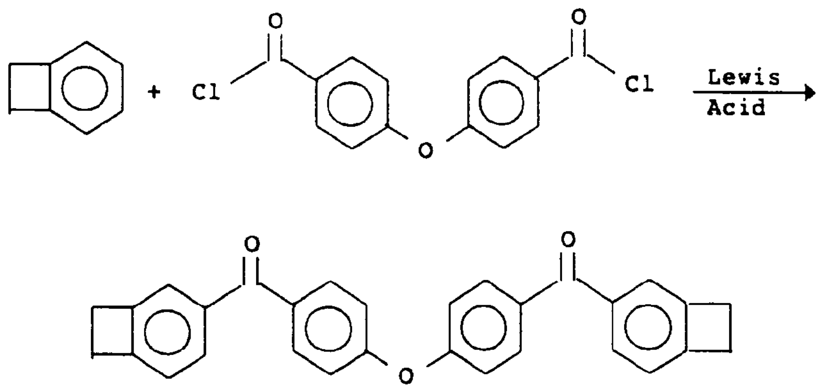


The polymaleimide monomers employed in preparing the polymers of this invention correspond to the formula

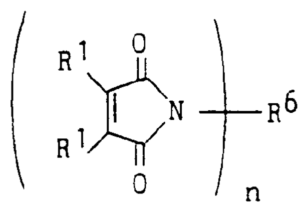

wherein:

n is an integer of 2 or greater;

$R^1$ is separately and independently in each occurrence, a monovalent moiety, provided that $R^1$ does not interfere with polymerization; and

$R^6$ is an n-valent organic bridging member.

$R^1$ preferably is hydrogen or $C_1$-$C_4$ alkyl.

The n-valent organic bridging member refers to any organic moiety which can link two (when n=2) or more (when n>2) maleimide radicals. Preferably, the n-valent organic bridging member is a hydrocarbon poly-yl or a heteroatom-containing hydrocarbon poly-yl. Poly-yl refers herein to a polyvalent radical, for example, ar-poly-yl refers to a polyvalent aromatic radical. Poly refers herein to two or more. A heteroatom-containing hydrocarbon poly-yl is a hydrocarbon poly-yl which contains one or more of the heteroatoms comprising oxygen, sulfur, nitrogen, silicon, or phosphorus. The heteroatom in the heteroatom-containing organic species is always removed from the maleimide ring nitrogen by at least one carbon atom. Included within the term hydrocarbon are any organic radicals containing carbon and hydrogen atoms.

More preferred $R^6$ moieties are divalent and represented by the formulae:

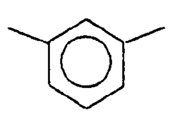 , 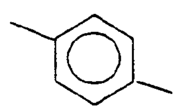 ,

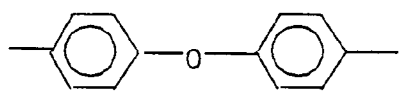 ,

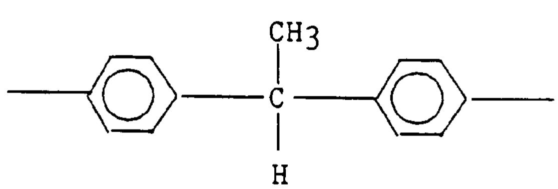 ,

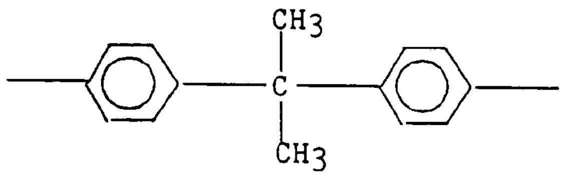

,

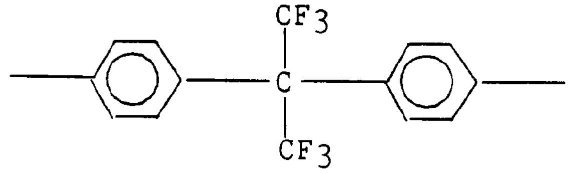

,

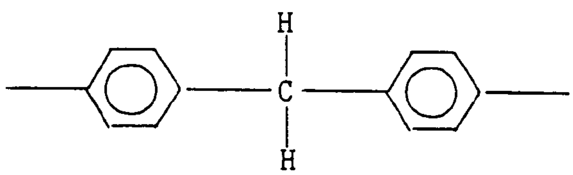

,

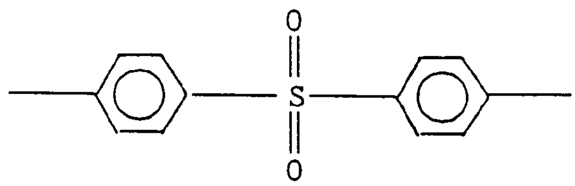

, and

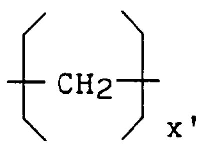

wherein x′ is at least 1. The most preferred $R^6$ moiety is:

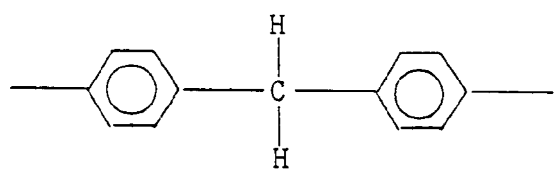

.

These polymaleimides are dienophilic and react with conjugated dienes to form a six-membered ring. Such dienophiles are discussed in Morrison and Boyd, "Organic Chemistry," 3rd Ed., 1973.

Suitable polymaleimides (hereinafter called PMI comonomers) include 1,2-bismaleimido ethane, 1,4-bismaleimido butane, 1,6-bismaleimido hexane, 1,12-bismaleimido dodecane, 1,6-bismaleimido-(2,2,4-trimethyl) hexane, 1,3-bismaleimido benzene, 1,4-bismaleimido benzene, 4,4′-bismaleimido diphenyl methane, 4,4′-bismaleimido diphenyl ether, 4,4′-bismaleimido diphenyl sulfide, 4,4′-bismaleimido diphenyl sulfone, 4,4′-bismaleimido dicyclohexyl methane, 2,4-bismaleimido toluene, 2,6-bismaleimido toluene, N,N′-m-xylylene bismaleic imide, N,N′-p-xylylene bismaleic imide, N,N′-m-phenylene-bis-citraconomide, N,N′-4,4′-diphenylmethane-citraconimide, and eutectic blends of bismaleimides such as Kerimid 601™, a trademark of Rhone-Poulenc, Compimide 353™ and Compimide 796™, trademarks of Technochemie GMBH, Verfahrenstechnik, a subsidiary of Deutsche Shell AG. The compositions of these three trademarked materials are described in "Engineered Materials Handbook", Vol. 1, p. 78-89, Composites, ASM International. Methods of preparing such polymaleimides are disclosed in "Polymer", Vol.26, p. 1561, September 1985; US-A-4,745,166; 4,464,520; 4,518,754; 4,711,964; 3,018,290; 4,460,783; 4,564,683; 3,890,272; 4,609,705; 4,288,583; and 4,116,937.

In addition to the PMI comonomer and the biscyclobutarene comonomer, some embodiments of the copolymer of this invention contain one or more optional monomers, which can copolymerize with the comonomers and may increase the pot life of the molten monomer mixture, increase the toughness of the cured resin, and decrease the polymerization onset temperature.

Suitable optional components which may be added to increase the pot life of the molten monomer mixture and increase the toughness (greater than 30-40 $J/m^2$) of the cured resin include free radical inhibitors such as 2,6-di-tert-butyl-4-methylphenol, tetrakis [methylene (3,5-di-tert-butyl-4-hydroxyhydrocinnamate)]methane, tris (2,4-di-tert-butyl-phenyl)phosphite, thiodiethylene bis-(3,5-di-tert-butyl-4-hydroxy)hydrocinnamate, octadecyl 3,5-di-tert-butyl-4- -hydroxy)hydrocinnamate, N,N-diphenyl-p-phenylenediamine, 1,2-dihydro-2,2,4-trimethyldihydro-quinoline; triphenylmethane,

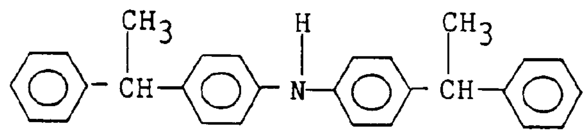 ,

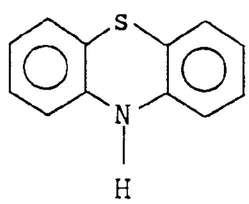 , 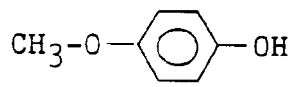 ,

disulfides such as alkylaryl disulfides, dialkyldisulfides, and diaryldisulfides including

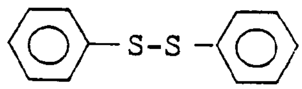 ,

and an isomeric mixture of octylated diphenylamines such as

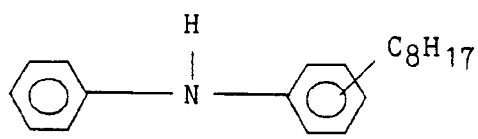 .

The most preferred free radical inhibitor is 2,6-di-tert-butyl-4-methylphenol.

Preferably, the range of the mole ratio of the PMI monomer to the optional free radical inhibitor component should be an amount sufficient to provide an increased pot life of the molten monomer mixture and increased toughness of the cured resin. More preferably, the range of the mole ratio of the PMI monomer to the optional free radical inhibitor component is from 80:20 to 99.999:0.001 with the most preferred range being from 95:5 to 99.95:0.05.

Suitable optional components which may be added to decrease the onset temperature include 1,1-substituted aryl ethylenes which correspond to the formula:

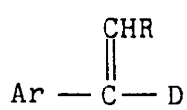

wherein:

Ar is a monovalent aromatic or heteroaromatic moiety;

R is H or an alkyl moiety containing 1-4 carbon atoms; and

D is a monovalent aromatic or heteroaromatic moiety, provided that it is a cyclobutarene-containing moiety only when Ar is a cyclobutarene-containing moiety.

Hereinafter these monomers will be called 1,1-monomers.

Preferred D moieties include aryl, and

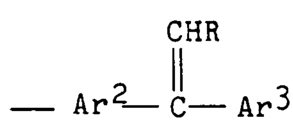

wherein $Ar^2$ and $Ar^3$ are, separately and independently in each occurrence, aromatic or heteroaromatic moieties as hereinbefore defined, and R is as hereinbefore defined.

Suitable 1,1-monomers include the following.

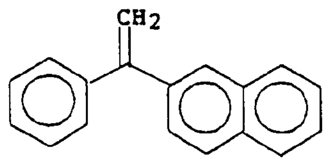
,
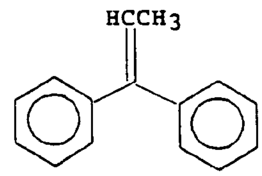
,
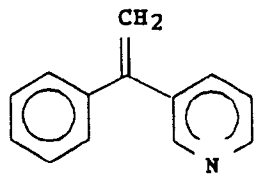
,
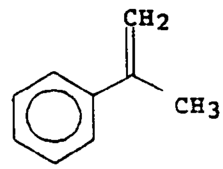
,
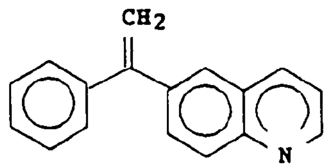
,
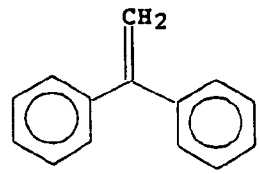
,
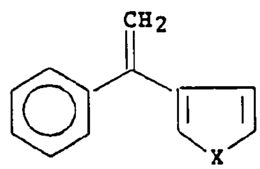
,
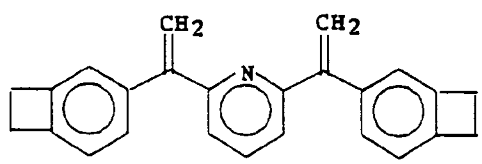
,
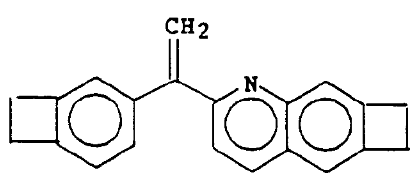
,
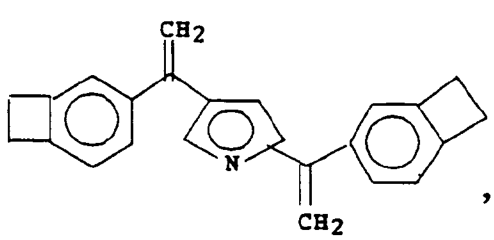
,

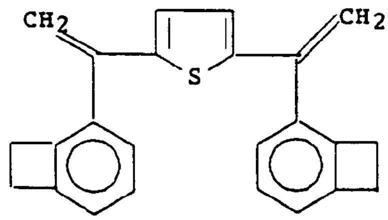

,

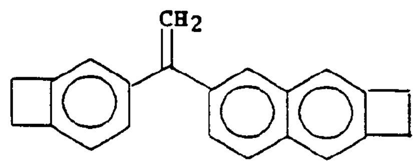

,

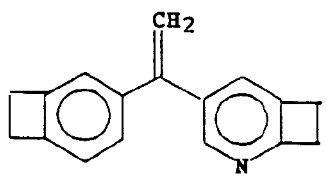

,

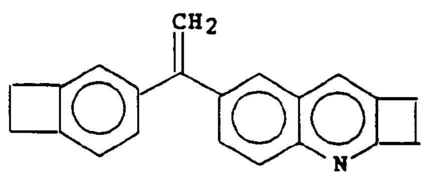

,

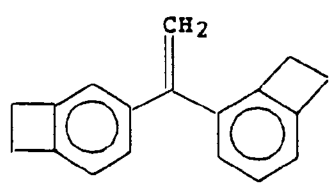

,

and

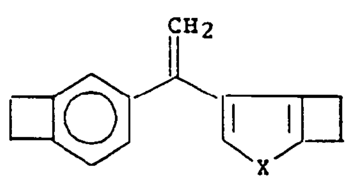

,

wherein X is 0, S, or NR, and R is H or alkyl.

Other suitable 1,1-substituted ethylenes which may decrease the onset temperature are represented by the following formula.

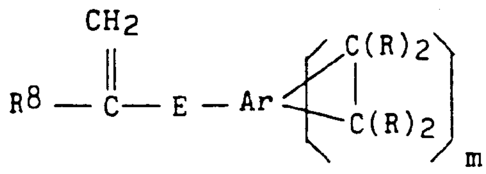

wherein:

Ar is a polyvalent aromatic or heteroaromatic moiety having three or more valences, provided that the carbons of the cyclobutane ring are bonded to adjacent carbon atoms on the same aromatic ring of Ar;

E is a covalent bond or a divalent organic or inorganic moiety, as hereinafter defined;

m is an integer of at least 1;

R is a monovalent moiety, preferably hydrogen or $C_1$-$C_4$ alkyl; and

$R^8$ is a monovalent organic moiety.

Ar, E, R, and $R^8$ are selected such that they do not interfere with polymerization.

Hereinafter these monomers will be called 1,1-monomers.

Divalent organic moiety refers herein to any organic moiety bonded to two other moieties. The divalent organic moiety may also contain one or more heteroatoms, such as oxygen, nitrogen, phosphorus, silicon, or sulfur. Preferred divalent organic moieties include aliphatics such as alkyl, alkenyl, and alkynyl; arylenes such as the following;

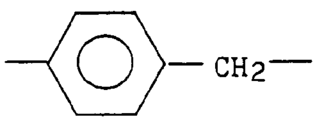 , 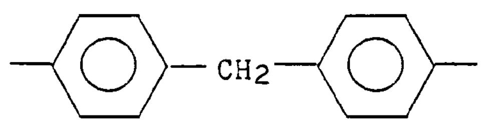 ,

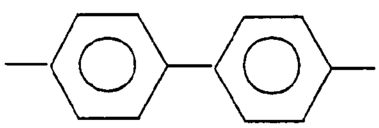 , and 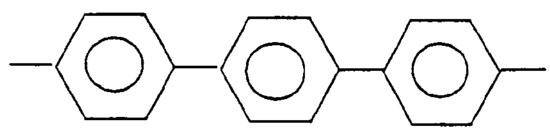 ,

sulfones, and carbonyl containing species. More preferred organic moieties include arylenes, and carbonyl containing species. The most preferred E is a direct bond.

Divalent inorganic moiety refers herein to any inorganic moiety which can bond to two other moieties. Preferred inorganic moieties include oxygen and sulfur. The most preferred inorganic moiety is oxygen.

Preferably, the cyclobutarene moiety is a benzocyclobutane moiety, wherein the aromatic moiety, Ar, is a poly-yl derived from a benzene moiety.

Preferably R is hydrogen, and $R^8$ is selected from the group consisting of phenyl, 2-naphthyl, p-tert-butylphenyl, 4-methylphenyl, 3-methylphenyl, 2--methylphenyl, p-biphenyl,

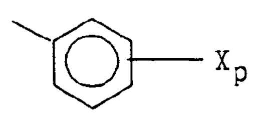 , and

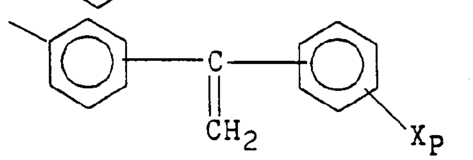 ;

wherein:

p is 1, 2, 3, 4, or 5; and

X is separately and independently in each occurrence a monovalent moiety, as hereinbefore defined.

More preferably R is hydrogen, and $R^8$ is phenyl, 2-naphthyl, p-tert-butylphenyl, 3-methylphenyl, 4-methylphenyl, or p-biphenyl. Most preferably R is hydrogen and $R^8$ is 4-methylphenyl.

When the cyclobutarene moiety is benzocyclobutane, the preferred monomers correspond to the formulae

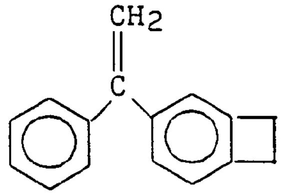,
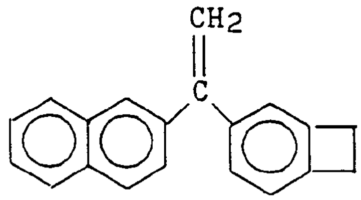,
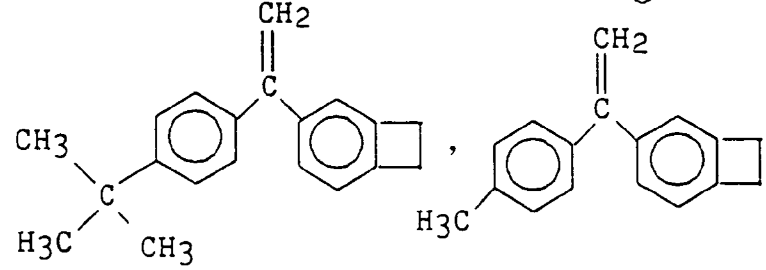,

and

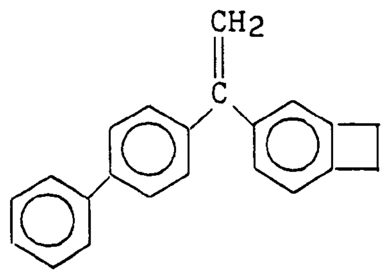.

The most preferred monomer corresponds to the formula:

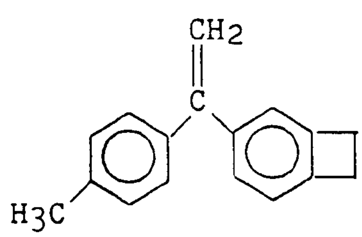.

Preferably, the range of the mole ratio of polymaleimide to the optional 1,1-monomer component, should be an amount sufficient to lower the onset temperature. More preferably, the mole ratio of the polymaleimide to the optional 1,1-monomer component, is 80:20 to 99:1, with the most preferred ratio being 90:10 to 95:5.

Other optional components which may be added to provide improved physical properties or improved combinations of physical properties in the copolymer include other poly- and mono(cyclobutarenes). Suitable poly(cyclobutarenes) and their preparation are disclosed in US-A-4,540,763, and 4,999,449. Suitable mono(cyclobutarenes) and their preparation are disclosed in US-A-4,540,7637 4,783,514; 4,642,329; 4,831,172; 4,724,2609 4,743,3997 and 4,661,193.

The amounts of PMI comonomer and biscyclobutarene comonomer employed in preparing the copolymers of this invention can vary. Suitable amounts are those which provide a mixture of monomers that thermally copolymerize to yield copolymers which have improved physical properties or improved combinations of physical properties compared to those of known bismaleimide homopolymers. Some of these properties include enhanced oxidative stability (0 percent weight loss at 350°C), chemical/solvent resistance, high tensile strength, high temperature resistance, electroinsulative or electroconductive properties, decreased water absorption and a high Tg (greater than 200°C). A preferred mole ratio range of polymaleimide to biscyclobutarene monomer, is from 80;20 to 20:80. The more preferred mole ratio range of polymaleimide to biscyclobutarene monomer is from 70:30 to 30:70. The most preferred mole ratio range of polymaleimide to biscyclobutarene monomer is 1:1.

The copolymer composition is prepared by combining the biscyclobutarene comonomer and the PMI comonomer under conditions sufficient to form a copolymer. Application of heat is a preferred polymerization process since the comonomer mixture can thermally polymerize. Preferably such onset temperatures range from 150°C to 250°C. More preferred onset temperatures range from 150°C to 180°C. The most preferred onset temperature is 150°C. The preferred reaction conditions comprise conducting the polymerization in a nitrogen atmosphere in the absence of solvents or catalysts using the following cure cycle:

130°C for 1/2 hour
160°C for 1 hour
180°C for 1 hour
200°C for 1 hour
250°C for 1 hour.

The mixture of monomers may also be polymerized in the presence of additional optional components which are determined by the particular use of the copolymer. Such optional components include fibrous fillers such as glass, metal, quartz, and graphite; organic and inorganic fillers including polyaramids and polybenzoxazoles; polymerization catalysts, curing agents, and fire retardants. For example, the copolymer composition can contain an amount of an electroconductive metal such as silver or gold powder and can be used as a die-attach material. In another example, the copolymer composition contains reinforcing fibers of glass or other suitable reinforcing material and can be used as a composite. In a third example, a composite comprises a reinforcing substrate and a copolymer of a polymaleimide and a biscyclobutarene monomer.

The copolymers of this invention have improved physical properties or improved combinations of physical properties compared to PMI homopolymers. For example, low onset temperature, adhesion, thermal stability, oxidative stability, solvent/chemical resistance, Tg, decreased water pick-up, dielectric constant, elongation at break, and toughness may be improved.

Another advantageous property of these copolymers is their excellent long term thermal stability at elevated temperatures.

Preferably, the copolymers of this invention have a Tg range of 250 to 350°C. More preferably their Tg range is from 275 to 350°C. The most preferred Tg range is from 300 to 350°C.

The following examples are illustrative only, and do not limit the scope of the invention.

Example 1 - COPOLYMER OF 1,3-BIS(4-BENZOCYCLOBUTENOYL)BENZENE WITH 1,1′-[METHYLENEDI-4,1-PHENYLENE]BISMALEIMIDE

A mixture of 2 g (0.0059 mol) of 1,3-bis(4-benzocyclobutenoyl)benzene,

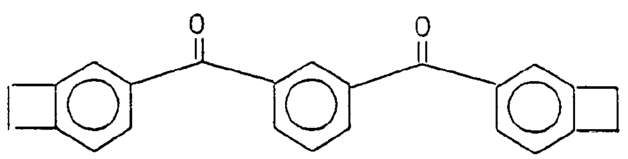

,

prepared according to the procedure described in US-A-4,999,449; and 2.11 g (0.0059 mol) of 1,1′-[methylenedi-4 ,1-phenylene]bismaleimide is placed in a mortar and pestle and ground to a fine powder. This powder is loaded into a Teflon (Trade Mark) mold which is placed in a vacuum oven preheated to 160°C. After the monomers melt the mold is removed to a hot plate apparatus. The polymerization is performed on the hot plate in a nitrogen atmosphere using the following cure schedule:

180°C for 1 hour
190°C for 0.5 hour
200°C for 0.5 hour
225°C for 0.5 hour
250°C for 1 hour.

The polymer is cooled to room temperature.

Thermomechanical analysis of the copolymer, using a Du Pont Instruments 943 thermomechanical analyzer with a macroexpansion probe weighted with one gram and a heating rate of 5°C per minute, shows a Tg at 306°C, and a linear coefficient of thermal expansion of 44.6 μm/m°C between 25°C and 250°C.

Dynamic Mechanical analysis of the copolymer, using a Du Pont Instruments dynamic mechanical analyzer with a fixed oscillation frequency of 1Hz, a 0.7 mm peak to peak oscillation amplitude, a clamping force of 10 in-lbs (160 J), and a heating rate of 3°C per minute to a final temperature of 400°C, shows a loss modulus peak at 302.5°C. A room temperature flexural modulus of 525 kpsi is observed.

Thermogravimetric analysis of the copolymer, using a Du Pont Instruments 951 thermogravimetric analyzer and a 9900 Computer/Thermal Analyzer, shows a 5.3 percent weight loss in a nitrogen atmosphere at 343°C after 50 hours, and a 10.3 percent weight loss in air at 343°C after 50 hours.

Example 2 - COPOLYMER OF 1,3-BIS(4-BENZOCYCLOBUTENOYL)BENZENE WITH 4,4′-BIS(MALEIMIDOPHENYL)ETHER

4,4′-bis(maleimidophenyl)ether is prepared by acetic anhydride dehydration of the corresponding amic acid. A mixture of 2 g (0.0059 mol) of 1,3-bis(4-benzocyclobutenoyl)benzene and 2.13 g (0.0059 mol) of 4,4′-bis(maleimidophenyl)ether is placed in a mortar and pestle and ground to a fine powder. This powder is loaded into a Teflon mold which is placed in a vacuum oven preheated to 160°C. After the monomers melt the mold is removed to a hot plate apparatus. The polymerization is performed on the hot plate in a nitrogen atmosphere using the following cure schedule:

180°C for 1 hour
190°C for 0.5 hour
200°C for 0.5 hour
225°C for 0.5 hour
250°C for 1 hour.

The polymer is cooled to room temperature.

Thermomechanical analysis of the copolymer, using a Du Pont Instruments 943 thermomechanical analyzer with a macroexpansion probe weighted with one gram and a heating rate of 5°C per minute, shows a Tg at 301°C, and a linear coefficient of thermal expansion of 39.5 μm/m°C between 25°C and 250°C and 148 μ/m°C between 300°C and 375°C.

Thermogravimetric analysis of the copolymer, using a Du Pont Instruments 951 thermogravimetric analyzer and a 9900 Computer/Thermal Analyzer, shows a 12 percent weight loss in a nitrogen atmosphere at 400°C after 11 hours, a 7.2 percent weight loss in a nitrogen atmosphere at 350°C after 50 hours, and a 11 percent weight loss in air at 343°C after 50 hours.

Example 3 - COPOLYMER OF 1,3-BIS(4-BENZOCYCLOBUTENOYL)BENZENE WITH 1,1′-[METHYLENEDI-4,1-PHENYLENE]BISMALEIMIDE

Into a 100 mL 3-neck flask is placed a magnetic stirring bar, 4.4 g (0.012 mol) of 1,1′-(methylenedi-4,1-phenylene)bismaleimide, 4.07 g (0.012 mol) of 1,3-bis(4-benzocyclobutenoyl)benzene, and 50 mL of sulfolane (a solvent). A reflux condenser with a nitrogen inlet, and a thermometer are attached to the flask. The contents of the vessel are mixed to form a homogeneous blend. The flask is heated to 230°C over a period of 2.5 hours using an oil bath at a temperature of 245°C. The flask temperature is held at 230°C for three hours. After 20 minutes at 230°C the temperature in the flask begins to drop and its contents gel, while the temperature of the oil bath remains 240°C to 245°C. The oil bath temperature is maintained at 245°C for 30 more minutes while the temperature in the flask continues dropping. Heating is terminated and the reaction mixture cooled to room temperature overnight. Gelatinous material is scooped from the flask and placed into a beaker containing 100 mL of vigorously stirring methanol. Stirring is continued for one hour. The material is filtered thus isolating a tan solid which is washed with 200 mL of methanol. The solid is air dried for one hour and then placed in a one liter beaker with 300 mL of methanol which is stirred using a Brookfield Counter Rotating Mixer at a setting of 60. A small particle size solid is isolated by suction filtration and dried in air for several hours, followed by drying in a vacuum oven at 120°C overnight. Upon cooling to room temperature 6.78 g of product is recovered.

Example 4 - COPOLYMER OF 1,3-BIS(4-BENZOCYCLOBUTENOYL)BENZENE WITH 1,1′-(METHYLENEDI-4,1--PHENYLENE]BISMALEIMIDE AND 2,6-DI-TERT-BUTYL-4-METHYLPHENOL

Into a 200 mL 3-neck flask is placed a magnetic stirring bar, 4.4 g (0.012 mol) of 1,1′-(methylenedi-4,1-phenylene)bismaleimide, 4.07 g (0.012 mol) of 1,3-bis(4-benzocyclobutenoyl)benzene, 10 mg ($4.54 \times 10^{-5}$ mol) of 2,6-di-tert-butyl-4-methylphenol, and 50 mL of sulfolane (a solvent). A reflux condenser with a nitrogen inlet, a stopper, and a thermometer are attached to the flask. The contents of the vessel are mixed to form a homogeneous blend. The flask is heated to 210°C over a period of two hours using an oil bath at a temperature of 225°C. The flask temperature rises to 245°C in the following 45 minutes, while the bath temperature reaches 260°C. Heating is terminated and the reaction mixture cooled to room temperature overnight. Gelatinous material is scooped from the flask and placed into a one liter beaker containing 200 mL of methanol. The mixture is vigorously stirred with a Brookfield Counter Rotating Mixer at a setting of 40 for 30 minutes. The material is

suction filtered and air dried for one hour. The solid is isolated by suction filtration and air dried for one hour. It is then placed in a one-liter beaker with 200 mL of methanol and stirred using a Brookfield Counter Rotating Mixer at a setting of 50 for one hour. A solid is isolated by suction filtration and dried in a vacuum oven overnight. The vacuum oven temperature is increased to 170°C for 24 hours. Upon cooling to room temperature 7.43 g of product is recovered. Differential Scanning Calorimetry analysis of the product from room temperature to 420°C at 10°C per minute using a Du Pont Model 910 Differential Scanning Calorimeter shows no clearly defined Tg.

Example 5 - COPOLYMER OF 1,3-BIS(4-BENZOCYCLOBUTENOYL)BENZENE WITH 1,1′-[METHYLENEDI-4,1-PHENYLENE]BISMALEIMIDE AND 3-(1-(4-METHYLPHENYL)ETHENYL)BICYCLO(4.2.0)OCTA-1,3,5-TRIENE

Into a 100 mL round bottom flask is placed a magnetic stirring bar, 1.792 g (5.00 mmol) of 1,1′-(methylenedi-4,1-phenylene)bismaleimide, 1.521 g (4.5 mmol) of 1,3-bis(4-benzocyclobutenoyl)benzene, 0.1236 g (0.562 mmol) of 3-(1-(4-methylphenyl)ethenyl)bicyclo(4.2.0)octa-1,3,5-triene, and 50 mL of chloroform. When mixed, they form a homogeneous bright yellow solution. The solution is stored overnight under a blanket of nitrogen. Differential Scanning Calorimetry analysis of the mixture from room temperature to 400°C at 10°C per minute using a Du Pont Model 910 Differential Scanning Calorimeter shows a broad unsymmetrical exotherm starting at 164°C and centered at 131.44°C. The sample is cooled to room temperature and when reanalyzed using the same program, there appears to be a Tg at 274°C.

Example 6 - COPOLYMER OF 1,3-BIS(4-BENZOCYCLOBUTENOYL)BENZENE WITH 1,1′-[METHYLENEDI-4,1-PHENYLENE]BISMALEIMIDE AND 3-(1-(4-METHYLPHENYL)ETHENYL)BICYCLO(4.2.0)OCTA-1,3,5-TRIENE AND 2,6-DI-TERT-BUTYL-4-METHYLPHENOL

Into a 100 mL glass beaker is placed 7.1816 g (20.04 mmol) of 1,1′-(methylenedi-4,1-phenylene)bismaleimide, and 0.0933 g (0.423 mmol) of 2,6-di-tert-butyl-4-methylphenol. Into a second beaker is placed 6.4247 g (19 mmol) of 1,3-bis(4-benzocyclobutenoyl -)benzene and 0.2639 g (1.2 mmol) of 3-(1-(4-methylphenyl)ethenyl)-bicyclo(4.2.0)octa-1,3,5-triene. The two beakers are placed in an oven with a nitrogen atmosphere preheated to 160°C. After the monomers melt they are mixed together until homogeneous after which the homogeneous mixture is placed in a two inch by three inch mold. The mold is placed on a hot stage heating block that is preheated to 160°C under a nitrogen atmosphere. The polymerization is performed on the hot plate in a nitrogen atmosphere using the following cure schedule:

160°C for 1 hour
200°C for 1 hour
250°C for 2 hour.

The resulting 11.99 g of amber, homogeneous polymer is demolded at 250°C.

## Claims

1. A copolymerizable mixture of monomers comprising
(1) at least one polymaleimide, represented by the formula:

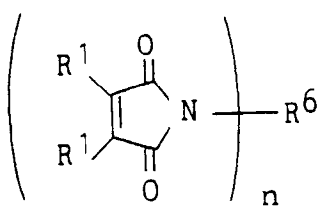

wherein:
n is an integer of 2 or greater;
$R^1$ is separately and independently in each occurrence, a monovalent moiety; and
$R^6$ is an n-valent organic bridging member; and
(2) a biscyclobutarene monomer represented by the formula

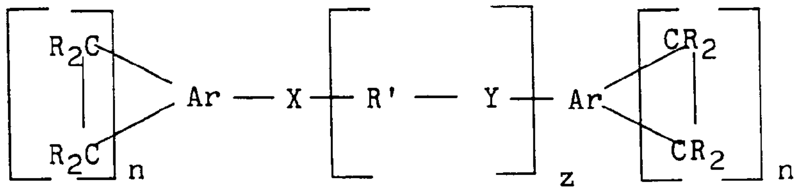

wherein:

n is an integer of 1 or more;

z is an integer between 0 and 3 inclusive;

X is

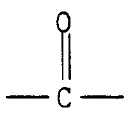, 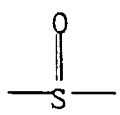, 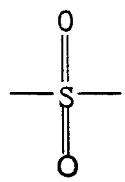,

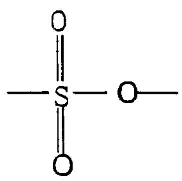, 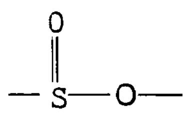,

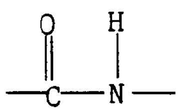, 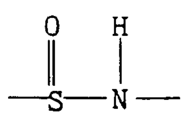, 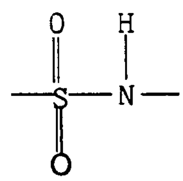,

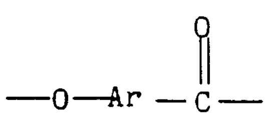, 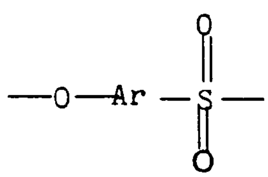,

with the proviso that no combination of Ar, X, R, R′, and Y results in a formula corresponding to an ester;

R′ is a direct bond or an alkyl, cycloalkyl, heterocyclic, aromatic, heteroaromatic, alkaryl, arylalkyl, cyoloalkaryl, aryloxy, alkyloxy, aminoaryl, aminoalkyl, arylamino, alkylamino, arylsilyl, silylaryl,

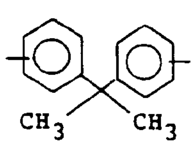, 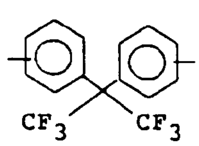,

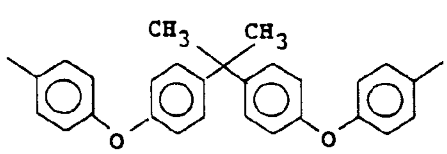,

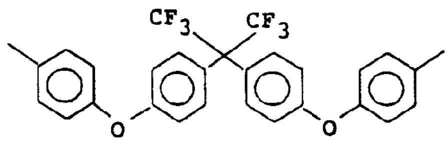,

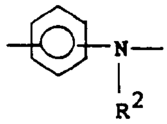, 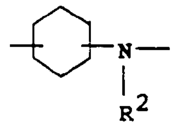,

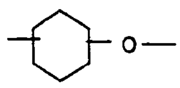, 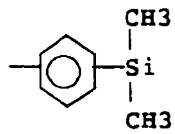, 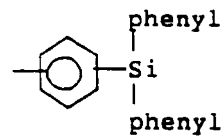

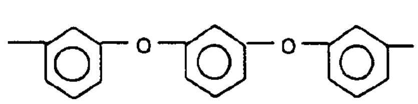, 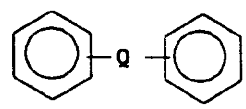

wherein $R^2$ is H or $C_1$-$C_4$ alkyl, and Q is a direct bond, alkyl, isopropylidene, hexafluoroisopropylidene, oxyaryloxy, sulfur, sulfone, sulfoxide, amino, alkamino, cycloalkyl, oxygen, dimethylsilyl, diphenylsilyl, or a phosphorus-containing moiety;

Y is a direct bond or X;

Ar is a polyvalent aromatic moiety or a polyvalent heteroaromatic moiety, provided that the carbon atoms of the cyclobutane ring on the fused side are bonded to adjacent carbon atoms on the same aromatic ring of Ar; and

R is a monovalent moiety.

2. A mixture as claimed in Claim 1, wherein in the formula of the biscyclobutarene, each n is 1, z is 1, X is a ketone carbonyl moiety, R′ is phenylene, Y is a ketone carbonyl moiety, each Ar is derived from benzene, and R is hydrogen or $C_1$-$C_4$ alkyl.

3. A mixture as claimed in Claim 2, wherein the biscyclobutarene is 1,3-bis(4-benzocyclobutenoyl)benzene.

4. A mixture as claimed in any one of the preceding claims, wherein in the formula of the polymaleimide, n is 2, $R^1$ is hydrogen or $C_1$-$C_4$ alkyl and $R^6$ is methylene di(p-phenylene) or di(p-phenylene)ether.

5. A mixture as claimed in any one of the preceding claims, wherein in the formula of the polymaleimide, $R^1$ is methylene di(p-phenylene).

6. A mixture as claimed in Claim 5, wherein the polymaleimide is 1,1′-(methylenedi-(4,1-phenylene)bismaleimide.

7. A mixture as claimed in Claim 1, wherein the polymaleimide is 1,1′-[methylenedi-(4,1-phenylene)]bismaleimide and the biscyclobutarene monomer is 1,3-bis(4-benzocyclobutenoyl)benzene.

8. A mixture as claimed in any one of the preceding claims, wherein said biscyclobutarene monomer is present in a mole ratio range of polymaleimide to biscyclobutarene monomer of 70:30 to 30:70.

9. A mixture as claimed in Claim 8, wherein said ratio is 1:1.

10. A mixture as claimed in any one of the preceding claims, comprising a free radical inhibitor in a mole ratio range of 5:95 to 0.05:99.95 of the free radical inhibitor component to the polymaleimide.

11. A mixture as claimed in Claim 10, wherein the free radical initiator is 2,6-di-tert-butyl-4-methylphenol.

12. A mixture as claimed in Claim 11, wherein the polymaleimide is 1,1′-[methylenedi-(4,1-phenylene)]bismaleimide, the biscyclobutarene monomer is 1,3-bis(4-benzocyclobutenoyl)benzene, and the free radical inhibitor is 2,6-di-tert-butyl-4-methylphenol.

13. A mixture as claimed in any one of the preceding claims, comprising an 1,1-substituted ethylene monomer in an amount sufficient to lower the onset temperature.

14. A mixture as claimed in Claim 13, wherein said 1,1-substituted ethylene monomer is present at a mole ratio of 10:90 to 5:95 of the 1,1-substituted ethylene monomer to polymaleimide.

15. A mixture as claimed in Claim 13 or Claim 14, wherein the 1,1-substituted ethylene monomer is 3-(1-(4-methylphenyl)ethenyl)-bicyclo(4.2.0)octa-1,3,5-triene.

16. A mixture as claimed in Claim 15, wherein the polymaleimide is 1,1′-[methylenedi-(4,1-phenylene)]bismaleimide, the biscyclobutarene monomer is 1,3-bis(4-benzocyclobutenoyl)benzene, the free radical inhibitor is 2,6-di-tert-butyl-4-methylphenol, and the 1,1-monomer is 3-(1-(4-methylphenyl)ethenyl)-bicyclo(4.2.O)octa-1,3,5-triene.

17. A mixture as claimed in any one of the preceding claims, which contains a component dispersed in the copolymer in an amount sufficient to provide reinforcement to the copolymer.

18. A mixture as claimed in Claim 17, wherein said component is selected from: glass, metal, quartz, and graphite fibers, organic and inorganic fillers, catalysts, curing agents, and fire retardants.

19. A mixture as claimed in Claim 18, wherein said organic filler is a polyaramid or a polybenzoxazole.

20. A copolymer comprising in copolymerized form
(1) at least one polymaleimide as defined in Claim 1, and
(2) a biscyclobutarene monomer as defined in Claim 1.

21. A copolymer as claimed in Claim 20, which comprises in polymeric form a mixture as claimed in any one of Claims 2 to 19.

22. A process for producing a copolymer as claimed in Claim 20 or Claim 21, comprising combining the said components under conditions sufficient to form the copolymer.

23. A process as claimed in Claim 22, wherein the combining under conditions sufficient to form a copolymer is carried out in contact with a reinforcing substrate.

24. The use of a biscyclobutarene as defined in Claim 1 as a comonomer to improve the physical properties of bismaleimide polymers.

25. A use as claimed in Claim 24, wherein the biscyclobutarene, bismaleimide and/or other polymer components are as defined in any one of Claims 2 to 19.